# EUROPÄISCHE PATENTSCHRIFT

(11) **EP 2 629 916 B1**
(45) Veröffentlichungstag und Bekanntmachung des Hinweises auf die Patenterteilung: **10.04.2019**
(21) Anmeldenummer: 10778893.7
(22) Anmeldetag: 21.10.2010
(51) Int. Cl.: B23F 1/06, B23Q 1/62, B23Q 1/70, B23Q 5/04, B23F 23/12

(54) **FRÄSKOPF FÜR EINE VERZAHNUNGSMASCHINE UND VERFAHREN ZUR HERSTELLUNG VON VERZAHNUNGEN**
MILLING HEAD FOR A GEAR CUTTING MACHINE AND METHOD FOR PRODUCING GEAR TEETH
TÊTE DE FRAISAGE POUR UNE MACHINE À TAILLER LES ENGRENAGES ET PROCÉDÉ DE FORMATION DE DENTS D'ENGRENAGE

(43) Veröffentlichungstag der Anmeldung: 28.08.2013
(73) Patentinhaber: IMO Holding GmbH, 91350 Gremsdorf (DE)
(72) Erfinder: RUß, Erich, 91350 Gremsdorf (DE); SEIFERT, Lothar, 91325 Adelsdorf (DE); NIEF, Richard, 91083 Baiersdorf (DE)
(74) Vertreter: Schmidt, Steffen J.
(86) Internationale Anmeldenummer: PCT/EP2010/065914
(87) Internationale Veröffentlichungsnummer: WO 2012/052058

(56) Entgegenhaltungen:
- EP-A2- 1 342 524
- DE-A1- 10 259 222
- DE-U1- 20 208 792
- JP-A- 2000 317 734
- US-A- 3 404 443

## Beschreibung

Die vorliegende Erfindung richtet sich einerseits auf eine Verzahnungsmaschine zum Versehen ringförmiger Werkstücke mit einer Verzahnung über den vollständigen Umfang des ringförmigen Werkstücks oder über einen Teilbereich oder ein Teilsegment des Umfangs des ringförmigen Werkstücks, mit einem Maschinenständer, der in Richtung einer y-Achse verfahrbar und festlegbar ist, und mit einem Fräskopf, der an dem Maschinenständer gelagert und festlegbar und in Richtung einer z-Achse verfahrbar ist, zu welcher eine Mittelachse eines Bearbeitungstischs parallel verläuft, um die der Bearbeitungstisch, auf welchem ein zu bearbeitendes Werkstück festlegbar ist, rotierbar gelagert ist, sowie andererseits auf die Verwendung einer solchen Verzahnungsmaschine im Rahmen eines Verfahrens zur Herstellung von Verzahnungen, wie z.B. Außenverzahnungen, insbesondere an ringförmigen Werkstücken.

Die DE 10 2005 043 835 A1 beschreibt einen beweglichen Fräskopf mit Torquemotorantrieb für eine zur Bearbeitung von Grossteilen eingerichtete Fräsmaschine. Dieser umfasst eine um eine erste Achse drehbar angeordnete Gabel, die zwei im Abstand zueinander verlaufende Gabelarme aufweisen, mit einer zwischen den Gabelarmen gehalterten Spindeleinrichtung, die um eine zweite Achse in Bezug auf die Gabel drehbar angeordnet ist, mit einer ersten Antriebseinrichtung, die einen ersten Torquemotor aufweist, der zum direkten Antrieb und zur Steuerung der Drehung der Gabel um die erste Achse an die Gabel gekoppelt ist, und mit einer in der Gabel angeordneten zweiten Antriebseinrichtung, die einen zweiten Torquemotor zum Antrieb und zur Steuerung der Drehung der Spindeleinrichtung um die zweite Achse und eine untersetzende Zahnradgetriebeeinrichtung aufweist, die zwischen dem Torquemotor und der Spindeleinrichtung antriebsmäßig eingefügt ist, um die Drehbewegung des zweiten Torquemotors auf die Spindeleinrichtung zu übertragen und das von dem Torquemotor gelieferte Drehmoment auf die für die Spindeleinrichtung erforderliche Drehmomentwerte zu erhöhen.

Es ist also ein Fräskopf beschrieben, bei dem eine Spindeleinrichtung des Fräskopfs mit einem daran angeordneten Werkzeug um zwei Achsen schwenkbar gelagert ist. Das Dokument EP 0 885 081 B1 zeigt und beschreibt einen Mehrachsen-Drehkopf für eine Werkzeugmaschinenspindel mit einer um eine erste Achse drehbar angeordneten Gabel, die ein Paar voneinander beabstandeter Gabelarme aufweist, einer um eine zweite Achse drehbaren, zwischen den Gabelarmen angeordneten Spindel, einer ersten, an die Gabel gekuppelten Motoreinrichtung zum direkten Antrieb und zur Steuerung der Gabeldrehung um die erste Achse und einer zweiten, an die Spindel gekuppelten Motoreinrichtung zum direkten Antrieb und zur Steuerung der Spindeldrehung um die zweite Achse.

Auch hier ist ein Fräskopf beschrieben, bei dem eine Spindel um zwei Achsen schwenk- und/oder drehbar gelagert ist.

Die DE 102 59 222 A1 offenbart eine Vorrichtung zum Schleifen oder Fräsen von ringförmigen Innenzahnrädern, mit einer Werkstückaufnahme zur Aufnahme eines ringförmigen Werkstücks, und mit einem auf einem Maschinenbett gelagerten Werkzeugständer mit einer Halterung zur Aufnahme eines das Werkstück bearbeitenden Werkzeugs, wobei der Werkzeugständer samt Halterung und Werkzeug innerhalb des ringförmigen Werkstücks angeordnet ist. Diesem Dokument sind jedoch keine Einzelheiten zu entnehmen, wie der Fräskopf gestaltet, angetrieben und/oder gelagert sein sollte, um eine hohe Stabilität und Robustheit zu erhalten.

Die DE 202 08 792 U1 betrifft andererseits keine Verzahnungsmaschine, sondern eine Drehfräsmaschine, wobei das Werkstück um eine Achse rotiert und ein Fräser um eine dazu parallele Achse. Damit ist die Herstellung einer Verzahnung nicht möglich, sondern allenfalls die Herstellung einer Kurbelwelle.

Die EP 1 342 524 A2 betrifft keine Verzahnungsmaschine mit einem Fräskopf, sondern eine Wälzstoßmaschine mit einer Stoßspindel, die während des Bearbeitens eine kombinierte Dreh- und Hubbewegung mit einem vergleichsweise großen Hub ausführt, im Gegensatz zu einer Fräsmaschine, wo das Werkzeug eine reine Rotationsbewegung ausführt.

Das US-Patent 3,404,443 offenbart eine Maschine zum Testen oder zur Endbearbeitung einer Schrägverzahnung auf einem ringförmigen Werkstück, insbesondere durch Läppen. Dabei wird dieses Werkstück um eine horizontale Achse drehbar aufgespannt und sodann während der fortschreitenden Bearbeitung allmählich um eben diese Achse gedreht. Große, ringförmige Werkstücke lassen sich jedoch nicht in dieser Weise aufspannen. Darüber hinaus treten beim Läppen völlig anders geartete Kräfte auf als beim Fräsen.

Einen ähnlichen Offenbarungsgehalt hat die JP 2000 317734 A, wo ebenfalls ein zu bearbeitendes, ringförmiges Getriebeteil um eine horizontale Achse drehbar gelagert ist, während ein Ritzel mit der vorbearbeiteten Verzahnung in kämmenden eingriff gebracht wird, um je nach dem Getriebespiel die Oberflächen der Verzahnung zu läppen. Eine läppende Bearbeitung ist aber mit einem Fräsvorgang nicht vergleichbar.

Demgemäß besteht das die Erfindung initiierende Problem darin, einen stabilen und robusten Fräskopf hoher Steifigkeit für die Bearbeitung von Großteilen, insbesondere rotationssymmetrischen Großteilen, bereitzustellen. In Ergänzung dazu soll ein Fertigungsverfahren zur Herstellung von Verzahnungen bereitgestellt werden.

Zur Lösung dieses Problems sieht die Erfindung vor, einen gattungsgemäßen Fräskopf für eine Verzahnungsmaschine, wie zum Beispiel eine Innen- oder Außenverzahnungsmaschine, insbesondere zur Herstellung ringförmiger Werkstücke, mit einem Fräskopfblock und einem Torquemotor zu versehen, wobei der Fräskopfblock eine Aussparung aufweist, in welcher eine Fräsantriebswelle angeordnet ist, die mit dem Torquemotor verbunden ist und welche von dem Torquemotor angetrieben werden kann, wobei der Fräskopfblock wenigstens einen hinteren Lagersitz und einen vorderen Lagersitz sowie ein erstes Lager und ein zweites Lager aufweist, wobei das erste Lager in dem hinteren Lagersitz und das zweite Lager in dem vorderen Lagersitz angeordnet sind und wobei die Fräsantriebswelle in dem ersten Lager und dem zweiten Lager drehbar gelagert ist.

Ein derartiger Aufbau eines Fräskopfs bietet hohe Stabilität und Robustheit. Durch die Verwendung eines Torquemotors als Antrieb der Fräsantriebswelle kann ein sehr hohes Drehmoment bei geringen Drehzahlen aufgebracht werden. Abhängig vom verwendeten Fräswerkzeug sind sehr hohe Zerspanungsleistungen möglich, was besonders zur Herstellung von Innen- und Außenverzahnungen an großen Bauteilen von Vorteil ist. Die direkte Verbindung der Fräsantriebswelle über Lager mit dem Fräskopfblock ist spielfrei und mit wenigen, robusten Komponenten ausgeführt, so dass bei einer Vorschubbewegung des Fräskopfes die Fräsantriebswelle spielfrei mitbewegt wird. Auch die geringe Anzahl an beweglichen Komponenten erhöht die Fähigkeit des Fräskopfs hohe Kräfte aufzunehmen und ermöglicht so eine hohe Zerspanungsleistung.

In einer Ausgestaltung der Erfindung ist die Aussparung rotationssymmetrisch.

Die rotationssymmetrische Ausführung der Aussparung erleichtert die Montage der Fräsantriebswelle und der Lager am Fräskopfblock. In einer weiteren Ausgestaltung der Erfindung ist die Fräsantriebswelle direkt und ohne Getriebe mit dem Torquemotor verbunden.

Eine getriebelose Ausbildung dieser Verbindung hat den Vorteil, dass Schlupf und/oder Spiel vermieden werden. Außerdem begrenzen Getriebe das übertragbare maximale Drehmoment, weshalb eine direkte Verbindung von Fräsantriebswelle und Torquemotor günstig ist.

In einer weiteren Ausgestaltung der Erfindung ist das erste Lager ein Stützlager und das zweite Lager ein Hauptlager.

Vorteilhafterweise ist das erste Lager so ausgelegt, dass die Fräsantriebswelle in einem hinteren Bereich des Fräskopfblocks abgestützt ist und in einem vorderen Bereich des Fräskopfblocks in einem auf hohe Belastungen ausgelegten Lager gelagert ist. Das Stützlager kann dabei im Vergleich zum Hauptlager auf geringere Belastungen ausgelegt sein.

In einer weiteren Ausgestaltung der Erfindung weist die Fräsantriebswelle wenigstens einen vorderen Abschnitt und einen hinteren Abschnitt auf, wobei an dem vorderen Abschnitt eine Spannscheibe und/oder ein Werkzeug, insbesondere ein Zahnformfräser, vorgesehen sind und wobei das zweite Lager so benachbart zu der Spannscheibe angeordnet ist, dass bei Betrieb des Werkzeugs entstehende Kräfte, insbesondere Biegemomente und/oder Kippmomente und/oder Scherkräfte, die von dem Werkzeug auf die Fräsantriebswelle übertragen werden, wenigstens teilweise über das zweite Lager auf den Fräskopfblock weitergeleitet werden können, und/oder wobei das erste Lager so benachbart zu dem Torquemotor angeordnet ist, dass bei Betrieb des Werkzeugs entstehende Kräfte, insbesondere Biegemomente und/oder Kippmomente und/oder Scherkräfte, die von dem Werkzeug auf die Fräsantriebswelle übertragen werden, wenigstens teilweise über das erste Lager auf den Fräskopfblock weitergeleitet werden können.

Das Vorsehen einer Spannscheibe mit üblicherweise darauf angeordnetem Werkzeug hat zur Folge, dass während des Fräsprozesses auftretende Kräfte, die auf das Werkzeug wirken, über die Spannscheibe an die Fräsantriebswelle weitergegeben werden. Dadurch entstehen in Zusammenwirkung mit der Lagerung der Fräsantriebwelle vor allem bei großen Zerspanungsleistungen Biege- und/oder Kippmomente und/oder Scherkräfte, die von den Lagern in einer derartigen Anordnung vorteilhaft an den Fräskopfblock weitergeleitet werden können. Insbesondere wird vermieden, dass derartige Momente oder Kräfte auf den Torquemotor rückwirken.

In einer weiteren Ausgestaltung der Erfindung ist benachbart zum hinteren Abschnitt der Fräsantriebswelle ein hinterer Dichtungshalter angeordnet, der einen hinteren Abstreifer und/oder eine hintere Rotationsdichtung hält, wobei hinterer Abstreifer und/oder hintere Rotationsdichtung an der Fräsantriebswelle anliegen und diese gegenüber einem Kühl- und/oder Schmiermittelkreislauf abdichten und/oder dass benachbart zum vorderen Abschnitt der Fräsantriebswelle ein vorderer Dichtungshalter angeordnet ist, der einen vorderen Abstreifer und/oder eine vordere Rotationsdichtung hält, wobei vorderer Abstreifer und/oder vordere Rotationsdichtung an der Fräsantriebswelle anliegen und diese gegenüber einem Kühl- und/oder Schmiermittelkreislauf abdichten.

Vorteilhafterweise ist die Fräsantriebswelle mit Dichtungsanordnungen versehen, die die Fräsantriebswelle und die Lager gegenüber dem Kühlmittelkreislauf des Torquemotors und dem Kühl-/Schmiermittelkreislauf für die Fräsbearbeitung abdichten. Die Fräsantriebswelle und die Lager sind somit gegenüber eindringendem Kühl-/Schmiermittel und Spänen geschützt.

In einer weiteren Ausgestaltung der Erfindung ist der Fräskopfblock an einem Maschinenständer gelagert, wobei der Fräskopfblock in Richtung einer z-Achse verfahrbar und festlegbar ist und/oder wobei der Maschinenständer in Richtung einer y-Achse verfahrbar und festlegbar ist und/oder wobei ein Bearbeitungstisch vorgesehen ist, auf dem ein zu bearbeitendes Werkstück festlegbar ist und der um eine parallel zu einer z-Achse angeordnete Mittelachse rotierbar gelagert ist.

Eine derartige Anordnung ist besonders geeignet für die Bearbeitung rotationssymmetrischer Werkstücke. So ist es möglich den Fräskopfblock während der Fräsbearbeitung in nur einer bestimmten Richtung zu bewegen, während der Fräskopfblock und das Werkstück in allen anderen Freiheitsgraden festgelegt sind. In einer weiteren Ausgestaltung der Erfindung ist an dem Maschinenständer eine Vorrichtung zum Gewichtsausgleich vorgesehen ist, die mit dem Fräskopf in Wirkverbindung steht. Eine Vorrichtung zum Gewichtsausgleich vermindert vorteilhafterweise die Antriebsleistung um beispielsweise sehr massive und schwere Fräskopfblöcke entlang der z-Achse zu verfahren. Das erfindungsgemäße Verfahren zur Herstellung von Verzahnungen, wie z. B Außenverzahnungen, insbesondere an ringförmigen Werkstücken, umfasst die Schritte:
a) Aufspannen eines Werkstücks auf einem Bearbeitungstisch;
b) Annähren oder Zustellen eines Werkzeugs, insbesondere eines Zahnformfräsers, an das Werkstück, durch Bewegung eines Fräskopfs, insbesondere eines Fräskopfs nach einem der vorhergehenden Ansprüche, in Richtung einer z-Achse und Fixierung des Fräskopfs in Richtung der z-Achse, oder durch Bewegung eines Fräskopfs, insbesondere eines Fräskopfs nach einem der vorhergehenden Ansprüche, in Richtung einer y-Achse und Fixierung des Fräskopfs in Richtung der y-Achse;
c) Positionierung des Werkstücks durch Rotation des Bearbeitungstisches und Fixierung des Bearbeitungstisches;
d) Bewegung des Fräskopfs entlang der in Schritt b) nicht fixierten Achse und bearbeitender Eingriff des Werkzeugs in das Werkstück. Ein derartiges Verfahren ist insbesondere geeignet, um große Zerspanungsleistungen zu erzielen, da das Werkzeug nur in einer Richtung bewegt wird und entstehende Zerspankräfte, die auf das Werkzeug und den Fräskopf wirken, gut abgeleitet werden können. Auch sind die einzelnen Schritte besonders abgestimmt auf die Bearbeitung ringförmiger Werkstücke. Die Genauigkeit des Herstellungsverfahrens ist dadurch erhöht, dass der Fräskopf in einer Richtung verfahren wird, während er in den anderen Raumrichtungen fixiert ist und somit keine Lageabweichungen, das beispielsweise durch Spiel in beweglichen Teilen entstehen könnte, in diesen Richtungen zulässt.

In einer weiteren Ausgestaltung des erfindungsgemäßen Verfahrens wird durch einmaliges Durchführen der Schritte a bis d eine Zahnlücke mit Fertigmaß hergestellt.

Bei ausreichend großer Zerspanungsleistung reicht ein einmaliges Durchführen der Schritte a bis d aus um eine Zahnlücke mit Fertigmaß herzustellen. Dadurch wird erzielt bei der Bearbeitung des vollständigen Umfangs eines ringförmigen Werkstücks eine wesentliche Zeitersparnis erzielt.

In einer weiteren Ausgestaltung des erfindungsgemäßen Verfahrens erfolgt die Herstellung der Verzahnung über den vollständigen Umfang des ringförmigen Werkstücks oder über einen Teilbereich oder ein Teilsegment des Umfangs des ringförmigen Werkstücks.

Dadurch wird die Flexibilität des gesamten Herstellungsprozesses erhöht, indem auf einer Zerspanungsmaschine unterschiedliche Fertigungsaufgaben durchgeführt werden können.

In einer weiteren Ausgestaltung des erfindungsgemäßen Verfahrens dreht im Anschluss an die Schritte a bis d der Bearbeitungstisch 4 selbsttätig schrittweise, insbesondere mit geringer Geschwindigkeit, um seine Rotationsachse, wobei die Länge des Schrittes die Breite des zu fertigenden Zahnes festlegt und wobei der Bearbeitungstisch 4 nach jedem Schritt fixiert wird. Auf diese Weise kann die Zahngeometrie in einfacher Weise, schnell und genau festgelegt werden. In einer weiteren Ausgestaltung des erfindungsgemäßen Verfahrens erfolgt die Drehung des Bearbeitungstisches 4 um seine Rotationsachse über einen insbesondere elektrischen oder mechanischen Antrieb und ist durch eine Maschinensteuerung bestimmt.

Auf diese Weise können Parameter wie die Schrittlänge und Drehgeschwindigkeit programmiertechnisch einfach bestimmt werden und direkt an die Verzahnungsmaschine übergeben und ausgeführt werden. In einer weiteren Ausgestaltung der Erfindung werden während des bearbeitenden Eingriffs des Werkzeugs in das Werkstück auftretende Kräfte, insbesondere Biegemomente und/oder Kippmomente und/oder Scherkräfte, die von dem Werkzeug auf die Fräsantriebswelle übertragen, und können wenigstens teilweise über das erste Lager auf den Fräskopfblock weitergeleitet werden.

Dadurch wird es ermöglicht, dass keine Verformungen oder Verbiegungen der Fräsantriebswelle oder des Fräskopfblocks entstehen, die ansonsten Auswirkungen auf das Bearbeitungsergebnis hätten.

Die Erfindung wird nun anhand von Ausführungsbeispielen näher erläutert, wobei Bezug auf die beigefügten Zeichnungen genommen wird. Es zeigen jeweils in schematischer Darstellung
- Fig. 1: eine perspektivische Ansicht einer Außenverzahnungsmaschine mit einem Fräskopf zur Außenverzahnung;
- Fig. 2: eine vergrößerte perspektivische Ansicht eines Fräskopfs zur Außenverzahnung;
- Fig. 3: eine vergrößerte perspektivische Ansicht eines Fräskopfs zur Außenverzahnung von hinten;
- Fig. 4: eine vergrößerte und teilweise geschnittene perspektivische Ansicht eines Fräskopfs zur Außenverzahnung.

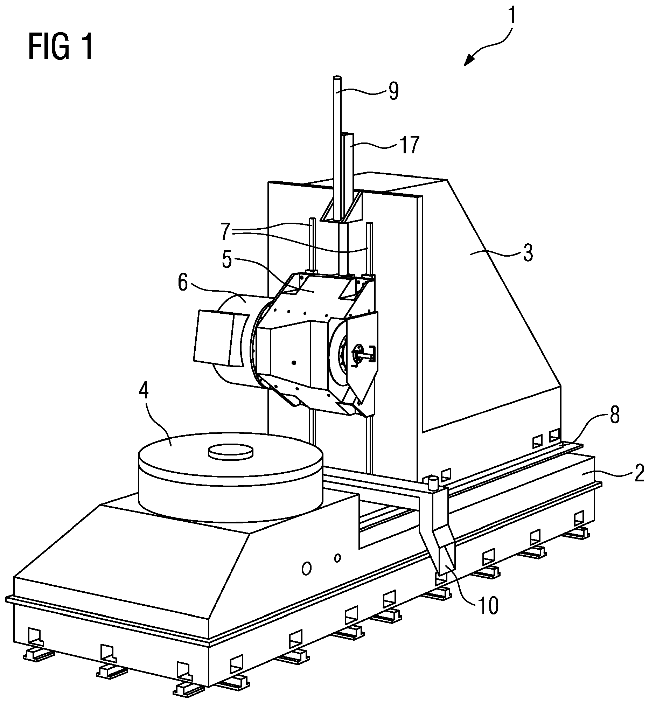

Fig. 1 zeigt eine Außenverzahnungsmaschine 1 mit einem Maschinenbett 2 und einem Maschinenständer 3, wobei der Maschinenständer 3 auf dem Maschinenbett mittels Linearführungen 8 entlang einer y-Achse verfahrbar gelagert ist. Das Maschinenbett 2 und/oder der Maschinenständer 3 sind durch eine Schweißkonstruktion mit einer Blechhaut gebildet, die mit Polymerbeton ausgegossen ist. Durch eine derartige Gestaltung werden sehr gute Dämpfung und Vibrationseigenschaften des Maschinenbetts 2 und/oder des Maschinenständers 3 erreicht, die sich günstig auf die Dynamik der Maschine auswirken. Alternativ kann auch konventioneller Beton verwendet werden. Bei dem Maschinenständer 3 kann auch eine reine Schweißkonstruktion ohne Beton zum Einsatz kommen.

Auf der Oberseite des Maschinenbettes 2 ist ein Bearbeitungstisch 4 gelagert auf dem ein zu bearbeitendes Werkstück eingespannt und bearbeitet werden kann. Der Bearbeitungstisch 4 ist so ausgebildet, dass insbesondere rotationssymmetrische Werkstücke bearbeitet werden können. Der Bearbeitungstisch 4 kann eine Drehverbindung aufweisen. Zu diesem Zweck kann der Bearbeitungstisch 4 um seine parallel zu einer z-Achse ausgerichtete Mittelachse rotieren, wobei das darauf eingespannte Werkstück mitrotiert wird und insbesondere nach außen gerichtete Flächen des Werkstücks mittels eines an dem Maschinenständer 3 gelagerten Fräskopfes 5 bearbeitbar sind. y-Achse und z-Achse sind im Sinne eines kartesischen Koordinatensystems zu verstehen. Gemäss Fig. 1 können die Begriffe y-Achse und z-Achse verstanden werden durch die Richtungen, welche die Linearführung z-Achse und die Linearführung y-Achse vorgeben.

Die Rotationsbewegung des Bearbeitungstisches 4 wird von zwei Elektromotoren, wie beispielsweise Asynchronmotoren, mit einem Master-Slave-Prinzip erzeugt. Die Elektromotoren sind sich jeweils gegenüberliegend an dem Bearbeitungstisch 4 angeordnet. Der Bearbeitungstisch 4 weist eine Außenverzahnung auf, in der Verzahnungen an den Wellen der Elektromotoren eingreifen können. Die Rotationsbewegung des Bearbeitungstisches 4 wird erzeugt, indem der erste Elektromotor ein definiertes erstes Drehmoment auf den Bearbeitungstisch 4 überträgt. Der zweite Elektromotor überträgt ein definiertes zweites Drehmoment auf den Bearbeitungstisch 4, wobei das erste Drehmoment größer ist als das zweite Drehmoment und das erste Drehmoment in einer dem zweiten Drehmoment entgegengesetzten Richtung wirkt. Der erste Elektromotor bewirkt dadurch eine Rotation des Bearbeitungstisches 4, wobei der zweite Elektromotor ein der Rotation entgegengesetzte Kraft auf den Bearbeitungstisch 4 ausübt, durch das größere Drehmoment des ersten Elektromotors aber mitgezogen wird. Dadurch wird eine genaue rotatorische Positionierung des Bearbeitungstisches 4 und damit des Werkstücks ermöglicht bei der das zwischen den Zahnflanken des Bearbeitungstisches 4 und den Zähnen der Wellen der Elektromotoren auftretende Spiel vermieden wird. Zusätzlich ist eine Bremse am Bearbeitungstisch 4 vorgesehen, um diesen in der vorgesehenen Position zu stoppen und zu fixieren. Der Fräskopf 5 ist über Linearführungen 7 in Richtung der z-Achse am Maschinenständer 3 verfahrbar gelagert. Seitlich an dem Fräskopf 5 ist ein Torquemotor 6 angeordnet, der dem Fräskopf Antriebsenergie zum rotatorischen Antreiben des Werkzeugs zur Verfügung stellt. Als Torquemotor soll hier ein Motor verstanden werden, der bei niedriger Drehzahl ein hohes Drehmoment zur Verfügung stellen kann und ohne Zwischengetriebe direkt an die Frässpindel angeschlossen wird. Üblicherweise sind derartige Motoren Elektromotoren, wie z. B. Servomotoren oder Permanentmagnet-Motoren, mit einer hohen Polzahl und einem ringförmigen, genutetem Rotor mit großem Durchmesser.

Für den Vorschub des Fräskopfs 5 in Richtung der z-Achse ist ein Antrieb 17 an dem Maschinenständer 3 vorgesehen. Ein weiterer Antrieb zum Verfahren des Maschinenständers 3 auf dem Maschinenbett 2 in y-Richtung ist ebenfalls vorgesehen, jedoch nicht gezeigt. Das Maschinenbett 2 ist auf justierbaren Maschinenschuhen gelagert und kann so in seiner Position verschoben oder justiert werden.

Zur Abfuhr der bei der Zerspanung entstehenden Späne ist ein Magnetförderer 10 vorgesehen. Die Außenverzahnungsmaschine 1 kann in der beschriebenen Konfiguration also den Fräskopf 5 mit daran angeordnetem Torquemotor 6 in Richtung der y-Achse verfahren. Üblicherweise ist während einer Bewegung des Fräskopfs 5 in y-Richtung der Fräskopf nicht in Eingriff mit dem Werkstück, es findet also keine Zerspanung statt. Üblicherweise wird der Maschinenständer 3 in eine Position auf der y-Achse gebracht und fixiert. Die Position des Maschinenständers 3 auf der y-Achse in Verbindung mit den Dimensionen des Fräskopfs 5 und des eingesetzten Werkzeugs definieren die Zustellung des Werkzeugs relativ zum Werkstück, also die Tiefe der zu erzeugenden Zahnlücke oder Zahnung.

Der Zerspanungsprozess findet statt, indem der Fräskopf 5 von oben nach unten entlang der z-Achse bewegt wird. Die Zustellung des Werkzeugs bleibt dabei fest, das Werkstück und der Bearbeitungstisch 4 sind ebenfalls fixiert. Um den linearen Verfahrweg des Fräskopfs 5 in Richtung der z-Achse gegen Verkippung zu sichern, ist ein Gewichtsausgleich 9 vorgesehen. Alternativ kann der Zerspanungsprozess auch stattfinden, indem der Fräskopf 5 auf der z-Achse fixiert wird und der Vorschub in y-Richtung stattfindet. Zur Steuerung der Außenverzahnungsmaschine ist eine reguläre SPS-Steuerung vorgesehen, mit der die Maschinenachsen einzeln angefahren werden können.

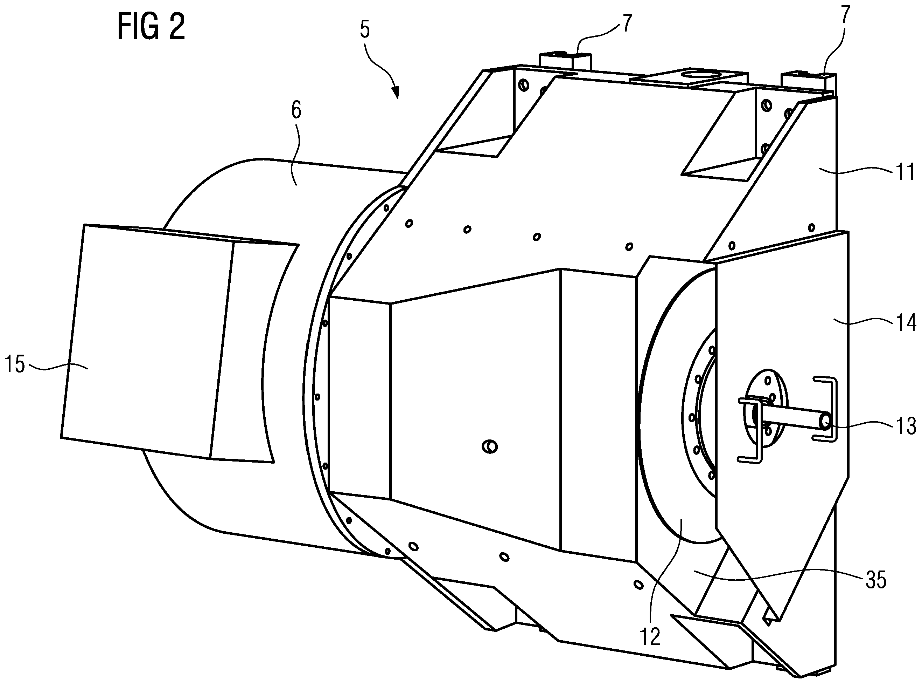

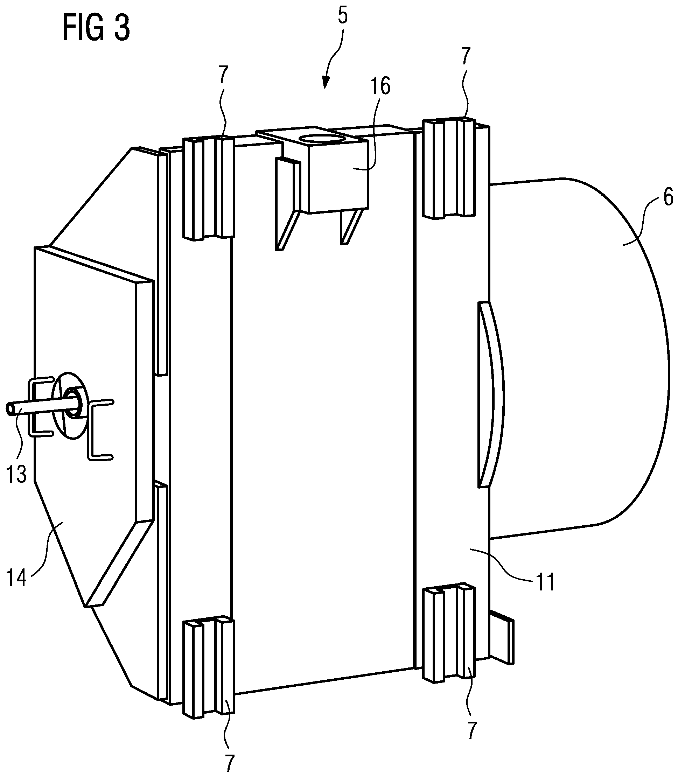

Fig. 2 zeigt eine vergrößerte Ansicht des Fräskopfs 5 mit dem seitlich dazu angeordneten Torquemotor 6. An dem Gehäuse des Torquemotors 6 ist ein Klemmkasten 15 dargestellt, der Torquemotor 6 ist wassergekühlt. Der Torquemotors 6 umfasst einen Fräskopfblock 11, der sehr kompakt ausgeführt ist, womit nur wenig Bauraum benötigt wird. An der Rückseite des Fräskopfblocks angeordnet sind die Führungen 7. Außerdem dargestellt ist eine Spannscheibe 12, auf der ein Werkzeug, wie z. B ein Zahnformfräser 22, befestigt sein kann. Ein Zuführstutzen 13 für Schmierflüssigkeit ist in geeigneter Weise mit der Spannscheibe 12, dem Fräskopfblock 11 und/oder der Fräsantriebswelle 20 verbunden und kann Schmierflüssigkeit dem Bearbeitungsraum und/oder im Werkzeug vorgesehenen Schmier und/oder Kühlmittelkanälen zuführen. Um den Werkzeugraum am Fräskopfblock 11 abzudecken ist eine abnehmbare Abdeckung 14 vorgesehen. Fig. 3 zeigt eine vergrößerte Ansicht des Fräskopfs 5 mit dem Torquemotor 6 von hinten wobei die Linearführungen 7 in geeigneter Weise an dem Fräskopfblock 11 angeordnet sind. Zuführstutzen 13 und Abdeckung 14 sind sichtbar. Außerdem ist auf der Rückseite des Fräskopfblocks 11 eine Fassung 16 für die Antriebsspindel des Antriebs in Richtung der z-Achse vorgesehen. Über die Fassung 16 kann der Fräskopfblock 11 also in Richtung der z-Achse bewegt werden.

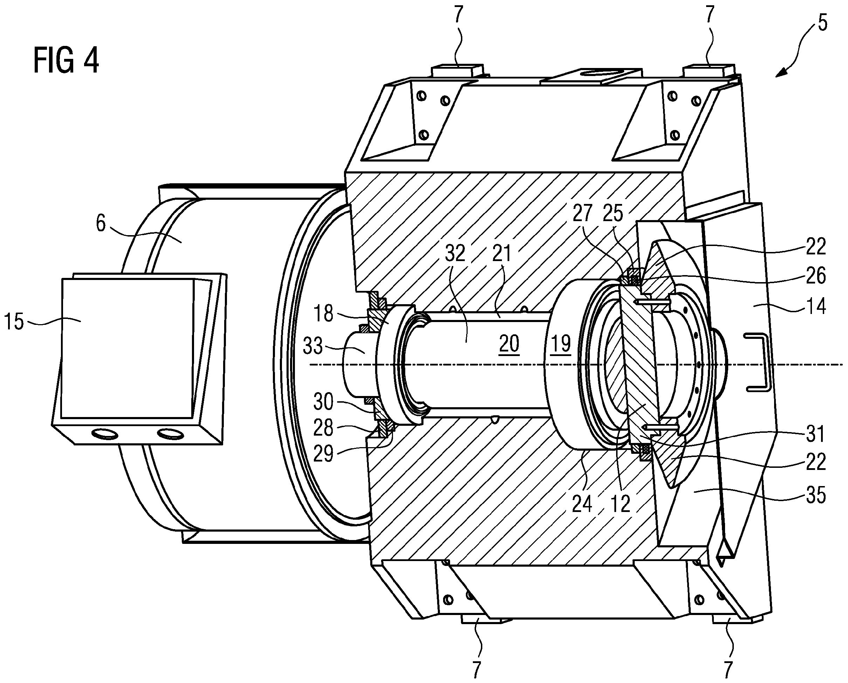

Fig. 4 zeigt den Fräskopf 5 mit seitlich an diesem angeordneten Torquemotor 6. Der Fräskopf 5, der in Fig. 4 geschnitten dargestellt ist, umfasst den Fräskopfblock 11, an dem die Linearführungen 7 angeordnet sind. Der Fräskopfblock 11 ist vorzugsweise mittig mit einer rotationssymmetrischen Aussparung 21 versehen. An der Begrenzung der Aussparung 21 sind durch stufenartige Absätze im Fräskopfblock 11 ein erster Lagersitz 23 und ein zweiter Lagersitz 24 angeformt. An oder in dem ersten Lagersitz 23 ist ein Stützlager 18 angeordnet, an oder in dem zweiten Lagersitz 24 ist ein Hauptlager 19 angeordnet. Beide Lager sitzen mit ihrem jeweiligen Außenring fest in dem ersten oder zweiten Lagersitz 23, 24. Die Lager können geeignete Kugel- oder Wälzlager sein. Ein Fräsantriebswelle 20 ist innerhalb der Innenringe von erstem und zweitem Lager 23, 24 aufgenommen und kann innerhalb des Fräskopfblocks 11 rotieren. Die Fräsantriebswelle 20 ist an ihrem hinteren Abschnitt 33 direkt, also ohne zwischengeschaltetes Getriebe mit dem Torquemotor 6 verbunden, so dass Drehmoment und Drehzahl des Torquemotors 6 direkt auf die Fräsantriebswelle 20 übertragen werden. An ihrem vorderen Abschnitt 34 weist die Fräsantriebswelle 20 die Spannscheibe 12 auf, welche einstückig mit der Fräsantriebswelle 20 geformt ist. Alternativ kann auch eine auswechselbare Spannscheibe 12 vorgesehen sein. An der Spannscheibe 12 ist als Werkzeug ein Zahnformfräser 22 angeordnet. Dieser kann üblicherweise mittels Schrauben auf der Spannscheibe 20 festgelegt sein. Der Zahnformfräser 22 ist geometrisch so gestaltet, dass beim Fräsen der Zahnlücke die Fräsergeometrie genau abgebildet wird. Die Geometrie der Zahnlücke entspricht also der Geometrie des Zahnformfräsers 22.

Wie bereits beschrieben, weist die Fräsantriebswelle 20 einen hinteren Abschnitt 33, einen mittleren Abschnitt 32 und einen vorderen Abschnitt 34 auf. Insbesondere der mittlere Abschnitt 32 ist dabei innerhalb der Innenringe von erstem und zweitem Lager 23, 24 aufgenommen. Vorteilhaft ist dabei ein Durchmesser des mittleren Abschnitts 32 von 250 mm und ein Durchmesser der Spannscheibe 12 von 450 mm. Die Positionen des ersten Lagersitzes 23 und des zweiten Lagersitzes 24 sind dabei so festgelegt, dass das Stützlager 18 die Fräsantriebswelle 20 in mittelbarer oder unmittelbarer Nähe der Verbindung der Fräsantriebswelle 20 zum Torquemotor 6 abstützt und dass das Hauptlager 19 die Fräsantriebswelle 20 in mittelbarer oder unmittelbarer Nähe zur Spannscheibe 12 abstützt.

Wird der Fräskopf 5 bei der Bearbeitung eines Werkstücks entweder in Richtung der y-Achse oder der z-Achse bei großer Spanabnahme zugestellt, so treten hohe Kräfte auf, die über den Zahnformfräser 22 und die Spannscheibe 12 auf die Fräsantriebswelle 20 übertragen werden und die insbesondere als Kippmoment auf die Fräsantriebswelle 20 wirken. Diese Kräfte müssen über Stütz- und Hauptlager 18, 19 auf den Fräskopfblock übertragen werden. Durch die beschriebene Anordnung können insbesondere die entstehenden Kippmomente vorteilhaft abgestützt werden. Die Ableitung dieser Kräfte auf den Fräskopfblock 11 ist wichtig, um die Geradheit der Fräsantriebswelle 20 im Betrieb und besonders bei großer Spanabnahme zu gewährleisten. Insbesondere das Hauptlager 19 ist so dimensioniert, dass es große Kräfte auf den Fräskopfblock 11 ableiten kann. Ein Weiterleitung von Kippmomenten an den Torquemotor 6 bzw. auf eine eventuell vorhandene Torquemotorwelle wird dadurch vermieden. Zur Abdichtung der Aussparung 21 und der Lager 18, 19 sind an dem vorderen Abschnitt 34 und dem hinteren Abschnitt 33 der Fräsantriebswelle 20 jeweils Dichtungssysteme angeordnet.

Das Dichtungssystem am hinteren Abschnitt 33 der Fräsantriebswelle 20 umfasst einen hinteren Dichtungshalter 28, der einen hinteren Abstreifer 29 hält, sowie eine hintere Rotationsdichtung 30. Hinterer Abstreifer 29 und hintere Rotationsdichtung 30 liegen an der Fräsantriebwelle 20 an und dichten diese gegenüber Flüssigkeit aus einem Kühlmittelkreislauf des Torquemotors 6 und/oder einem Kühl-/Schmiermittelkreislauf des Bearbeitungsraumes 35 ab. Der hinteren Dichtungshalter 28 ist dabei benachbart zu dem hinteren Lagersitz 23 angeordnet.

Das Dichtungssystem am vorderen Abschnitt 34 der Fräsantriebswelle 20 umfasst einen vorderen Dichtungshalter 25, einen vorderen Abstreifer 26 und eine vordere Rotationsdichtung 27. Der vordere Abstreifer 26 wird von dem vorderen Dichtungshalter 25 gehalten. Vorderer Abstreifer 26 und vordere Rotationsdichtung 27 liegen an der Fräsantriebwelle 20 an und dichten diese gegenüber Flüssigkeit aus einem Kühl-/Schmiermittelkreislauf des Bearbeitungsraumes 35 ab. Der vordere Dichtungshalter 25 ist dabei benachbart zu dem vorderen Lagersitz 24 angeordnet. Die Dichtungen sind so ausgelegt, dass bei auch bei höheren Drehzahlen und kleineren Spangrössen keine Kühlmittel, Kühlschmiermittel oder Schmutz in die Aussparung 21 eindringt. Die Anordnung der Dichtungssysteme benachbart zu den Lagersitzen 23, 24 und den darin befindlichen Lagern 18, 19 geschieht, weil die Verkippung der Fräsantriebswelle 20 nahe bei den Lagern minimal und der Rundlauf der Fräsantriebswelle 20 optimal ist. Daher ist die Dichtwirkung der Dichtungssysteme an diesen Stellen am höchsten.

Ein Verfahren gemäss der Erfindung zur Herstellung von Verzahnungen, wie z. B. Außenverzahnungen aber auch Innenverzahnungen, insbesondere an ringförmigen Werkstücken kann insbesondere mit einer Verzahnungsmaschine 1 durchgeführt werden. Dieses Verfahren umfasst die Schritte
- Aufspannen eines Werkstücks auf einen Bearbeitungstisch 4;
- Annähren oder Zustellen eines Werkzeugs, insbesondere eines Zahnformfräsers 22, an das Werkstück, durch Bewegung des Fräskopfs 5 in Richtung einer z-Achse und Fixierung des Fräskopfs 5 in Richtung der z-Achse, wobei alternativ der Fräskopf 5 in Richtung einer y-Achse an das Werkstück angenährt und fixiert werden kann;
- Positionierung des Werkstücks durch Rotation des Bearbeitungstisches 4 und Fixierung des Bearbeitungstisches 4;
- Bewegung des Fräskopfs 5 entlang der in Schritt b) nicht fixierten Achse und bearbeitender Eingriff des Werkzeugs in das Werkstück.

Bei diesem Verfahren wird der Fräskopf 5 mit dem Werkzeug in einer Richtung verfahren, während gleichzeitig das Werkstück fest eingespannt ist und das die Position des Fräskopfs in der zweiten möglichen Verfahrrichtung fixiert ist. Bei hohen Zerspanungsleistungen genügt ein einmaliges Durchführen der genannten Schritte um eine Zahnlücke mit Fertigmaß herzustellen. Alternativ kann ein Zahnlücke auch hergestellt werden, indem die Schritte Annährung des Werkzeugs und Eingriff des Werkzeugs entlang einer nicht fixierten Achse bei derselben Zahnlücke wiederholt werden. Die Positionierung des Werkstücks bleibt in diesem Falle gleich, nur das Werkzeug wird in einer Verfahrrichtung weiter auf das Werkstück hin zugestellt. Fertigmaß bedeutet, dass die geometrische Gestalt der Zahnlücke nicht mehr wesentlich nachbearbeitet wird. Zusätzliche Fertigungsschritte zur Verbesserung der Oberflächengüte, wie z. B. Schleifen, Polieren oder Härten können sich an die Herstellung der Zahnlückengeometrie anschließen. Insbesondere wenn das Werkzeug mit hohem Drehmoment und kleiner Drehzahl betrieben wird reicht ein einmaliges Durchführen dieser Schritte für die Herstellung einer Zahnlücke aus. Durch die Rotationsbewegung des Bearbeitungstisches 4 kann das Werkstück so rotiert werden, dass eine Verzahnung über den vollständigen Umfang des ringförmigen Werkstücks oder über einen beliebigen Teilbereich oder ein beliebiges Teilsegment des Umfangs des ringförmigen Werkstücks hergestellt wird. Die Breite eines zu fertigenden Zahnes kann dadurch festgelegt werden, indem im Anschluss an die oben genannten Fertigungsschritte der Bearbeitungstisch 4 selbsttätig schrittweise, insbesondere mit geringer Geschwindigkeit, um seine Rotationsachse dreht, wobei die Länge des Schrittes die Breite des zu fertigenden Zahnes festlegt und wobei der Bearbeitungstisch 4 nach jedem Schritt fixiert wird. Anfangsund Endpunkt jedes Drehschrittes des Bearbeitungstisches 4 entspricht dabei der Position des Zahnlückengrundes in radialer Richtung. In Abhängigkeit von der Geometrie des Werkzeugs, wie z. B. des Zahnformfräsers, ist dabei durch den Abstand der einzelnen Zahnlückengründe die Breite des oder der Zähne festgelegt. Die Drehung des Maschinentischs 4 kann dabei über elektrische oder mechanische Antriebe erfolgen und über eine Maschinensteuerung festgelegt werden.

**Bezugszeichenliste**

| | | | |
|---|---|---|---|
| 1 | Verzahnungsmaschine | | |
| 2 | Maschinenbett | 32 | mittlerer Abschnitt der Fräsantriebswelle |
| 3 | Maschinenständer | 33 | hinterer Abschnitt d. Fräsantriebswelle |
| 4 | Bearbeitungstisch | 34 | vorderer Abschnitt der Fräsantriebswelle |
| 5 | Fräskopf | 35 | Bearbeitungsraum |
| 6 | Torquemotor | | |
| 7 | Linearführungen z-Achse | | |
| 8 | Linearführungen y-Achse | | |
| 9 | Gewichtsausgleich | | |
| 10 | Magnetspäneförderer | | |
| 11 | Fräskopfblock | | |
| 12 | Spannscheibe | | |
| 13 | Zuführstutzen (für Schmierflüssigkeit) | | |
| 14 | Abdeckung | | |
| 15 | Klemmkasten | | |
| 16 | Fassung (für Antriebsspindel) | | |
| 17 | Antrieb z-Achse | | |
| 18 | Stützlager | | |
| 19 | Hauptlager | | |
| 20 | Fräsantriebswelle | | |
| 21 | Aussparung | | |
| 22 | Zahnformfräser | | |
| 23 | hinterer Lagersitz | | |
| 24 | vorderer Lagersitz | | |
| 25 | vorderer Dichtungshalter | | |
| 26 | vorderer Abstreifer | | |
| 27 | vordere Rotationsdichtung | | |
| 28 | hinterer Dichtungshalter | | |
| 29 | hinterer Abstreifer | | |
| 30 | hintere Rotationsdichtung | | |

## Patentansprüche

1. Verzahnungsmaschine (1) zum Versehen ringförmiger Werkstücke mit einer Verzahnung über den vollständigen Umfang des ringförmigen Werkstücks oder über einen Teilbereich oder ein Teilsegment des Umfangs des ringförmigen Werkstücks, mit einem Maschinenständer (3), der in Richtung einer y-Achse verfahrbar und festlegbar ist, und mit einem Fräskopf (5), der an dem Maschinenständer (3) gelagert und festlegbar und in Richtung einer z-Achse verfahrbar ist, zu welcher eine Mittelachse eines Bearbeitungstisches (4) parallel verläuft, um die der Bearbeitungstisch (4), auf welchem ein zu bearbeitendes Werkstück festlegbar ist, rotierbar gelagert ist, **dadurch gekennzeichnet, dass** der Fräskopf (5) einen Fräskopfblock (11) mit einer Aussparung (21) aufweist, worin eine Fräsantriebswelle (20) zum Antrieb des Fräswerkzeugs angeordnet ist, die mit einem Torquemotor (6) verbunden ist und von diesem angetrieben werden kann, wobei der Fräskopfblock (11) wenigstens einen hinteren Lagersitz (23) und einen vorderen Lagersitz (24) sowie ein erstes Lager (18) und ein zweites Lager (19) aufweist, wobei das erste Lager (18) in dem hinteren Lagersitz (23) und das zweite Lager (19) in dem vorderen Lagersitz (24) angeordnet sind und wobei die Fräsantriebswelle (20) in dem ersten Lager (18) und dem zweiten Lager (19) drehbar gelagert ist.

2. Verzahnungsmaschine (1) nach Anspruch 1, **gekennzeichnet dadurch, dass** die Aussparung (21) rotationssymmetrisch ist.

3. Verzahnungsmaschine (1) nach einem der vorhergehenden Ansprüche, **gekennzeichnet dadurch, dass** die Fräsantriebswelle (20) direkt und ohne Getriebe mit dem Torquemotor (6) verbunden ist.

4. Verzahnungsmaschine (1) nach einem der vorhergehenden Ansprüche, **gekennzeichnet dadurch, dass** das erste Lager (18) ein Stützlager und das zweite Lager (19) ein Hauptlager ist.

5. Verzahnungsmaschine (1) nach einem der vorhergehenden Ansprüche, **gekennzeichnet dadurch, dass** die Fräsantriebswelle (20) wenigstens einen vorderen Abschnitt (34) und einen hinteren Abschnitt (33) aufweist, wobei an dem vorderen Abschnitt (34) eine Spannscheibe (12) und/oder ein Werkzeug, insbesondere ein Zahnformfräser (22), vorgesehen sind und wobei das zweite Lager (19) so benachbart zu der Spannscheibe (12) angeordnet ist, dass bei Betrieb des Werkzeugs entstehende Kräfte, insbesondere Biegemomente und/oder Kippmomente und/oder Scherkräfte, die von dem Werkzeug auf die Fräsantriebswelle (20) übertragen werden, wenigstens teilweise über das zweite Lager (19) auf den Fräskopfblock (11) weitergeleitet werden können, und/oder wobei das erste Lager (18) so benachbart zu dem Torquemotor (6) angeordnet ist, dass bei Betrieb des Werkzeugs entstehende Kräfte, insbesondere Biegemomente und/oder Kippmomente und/oder Scherkräfte, die von dem Werkzeug auf die Fräsantriebswelle (20) übertragen werden, wenigstens teilweise über das erste Lager (18) auf den Fräskopfblock (11) weitergeleitet werden können.

6. Verzahnungsmaschine (1) nach einem der vorhergehenden Ansprüche, **gekennzeichnet dadurch, dass** benachbart zum hinteren Abschnitt (33) der Fräsantriebswelle (20) ein hinterer Dichtungshalter (28) angeordnet ist, der einen hinteren Abstreifer (29) und/oder eine hintere Rotationsdichtung (30) hält, wobei hinterer Abstreifer (29) und/oder hintere Rotationsdichtung (30) an der Fräsantriebswelle (20) anliegen und diese gegenüber einem Kühl- und/oder Schmiermittelkreislauf abdichten und/oder dass benachbart zum vorderen Abschnitt (34) der Fräsantriebswelle (20) ein vorderer Dichtungshalter (25) angeordnet ist, der einen vorderen Abstreifer (26) und/oder eine vordere Rotationsdichtung (27) hält, wobei vorderer Abstreifer (26) und/oder vordere Rotationsdichtung (27) an der Fräsantriebswelle (20) anliegen und diese gegenüber einem Kühl- und/oder Schmiermittelkreislauf abdichten.

7. Verzahnungsmaschine (1) nach einem der vorhergehenden Ansprüche, **gekennzeichnet dadurch, dass** an dem Maschinenständer (3) eine Vorrichtung zum Gewichtsausgleich (9) vorgesehen ist, die mit dem Fräskopf (5) in Wirkverbindung steht.

8. Verfahren zur Herstellung von Verzahnungen, wie z.B. Außenverzahnungen, insbesondere an ringförmigen Werkstücken;
unter Verwendung der Verzahnungsmaschine (1) nach einem der Ansprüche 1 bis 7, umfassend die Schritte:
a) Aufspannen eines Werkstücks auf dem Bearbeitungstisch (4);
b) Annähren oder Zustellen eines Werkzeugs, insbesondere eines Zahnformfräsers (22), an das Werkstück, durch Bewegung des Fräskopfs (5) in Richtung einer z-Achse und/oder der y-Achse Fixierung des Fräskopfs (5) in Richtung der z-Achse oder y-Achse;
c) Positionierung des Werkstücks durch Rotation des Bearbeitungstisches (4) und Fixierung des Bearbeitungstisches (4);
d) Bewegung des Fräskopfs (5) entlang der in Schritt b) nicht fixierten Achse und bearbeitender Eingriff des Werkzeugs in das Werkstück.

9. Verfahren nach Anspruch 8, **dadurch gekennzeichnet, dass** durch einmaliges Durchführen der Schritte a) bis d) eine Zahnlücke mit Fertigmaß hergestellt wird.

10. Verfahren nach einem der Ansprüche 8 oder 9, **dadurch gekennzeichnet, dass** die Herstellung der Verzahnung über den vollständigen Umfang des ringförmigen Werkstückes erfolgt oder dass die Herstellung der Verzahnung über einen Teilbereich oder ein Teilsegment des Umfangs des ringförmigen Werkstücks erfolgt.

11. Verfahren nach einem der Ansprüche 8 bis 10, **dadurch gekennzeichnet, dass** im Anschluss an die Schritte a) bis d) der Bearbeitungstisch (4) selbsttätig schrittweise, insbesondere mit geringer Geschwindigkeit, um seine Rotationsachse dreht, wobei die Länge des Schrittes die Breite des zu fertigenden Zahnes festlegt und wobei der Bearbeitungstisch (4) nach jedem Schritt fixiert wird.

12. Verfahren nach Anspruch 11, **dadurch gekennzeichnet, dass** die Drehung des Bearbeitungstisches (4) um seine Rotationsachse über einen insbesondere elektrischen oder mechanischen Antrieb erfolgt und durch eine Maschinensteuerung bestimmt ist.

13. Verfahren nach einem der Ansprüche 8 bis 12, **dadurch gekennzeichnet, dass** während des bearbeitenden Eingriffs des Werkzeugs in das Werkstück auftretende Kräfte, insbesondere Biegemomente und/oder Kippmomente und/oder Scherkräfte, die von dem Werkzeug auf die Fräsantriebswelle (20) übertragen werden, wenigstens teilweise über das erste Lager (18) auf den Fräskopfblock (11) weitergeleitet werden.

## Claims

1. A gear cutting machine (1) for providing annular workpieces with gear teeth over the entire circumference of the annular workpiece or over a partial area or a partial segment of the circumference of the annular workpiece, with a machine column (3) which is movable in the direction of a y axis and which may be fixed, and with a milling head (5) which is supported at the machine column (3) and may be fixed and is movable in the direction of a z axis, relative to which a centre axis of a machining table (4) extends in parallel, about which the machining table (4) is rotatably supported on which a workpiece to be machined may be fixed,
**characterized in that** the milling head (5) comprises a milling head block (11) with a recess (21) within which a milling drive shaft (20) for driving the milling tool is arranged which is connected with a torque motor (6) and may be driven by it, wherein the milling head block (11) comprises at least one rear bearing seat (23) and one front bearing seat (24) as well as a first bearing (18) and a second bearing (19), wherein the first bearing (18) is arranged in the rear bearing seat (23) and the second bearing (19) is arranged in the front bearing seat (24), and wherein the milling drive shaft (20) is rotatably supported in the first bearing (18) and in the second bearing (19).

2. The gear cutting machine (1) according to claim 1, **characterized in that** the recess (21) is rotation-symmetrical.

3. The gear cutting machine (1) according to one of the previous claims, **characterized in that** the milling drive shaft (20) is directly and without transmission connected with the torque motor (6).

4. The gear cutting machine (1) according to one of the previous claims, **characterized in that** the first bearing (18) is a support bearing and the second bearing (19) is a main bearing.

5. The gear cutting machine (1) according to one of the previous claims, **characterized in that** the milling drive shaft (20) comprises at least one front portion (34) and one rear portion (33), wherein a clamping washer (12) and/or a tool, in particular an involute gear cutter (22) are/is provided at the front portion (34), and wherein the second bearing (19) is arranged adjacent to the clamping washer (12) in such a manner that forces which are generated during operation of the tool, in particular bending moments and/or tilting moments and/or shear forces, which are transmitted from the tool to the milling drive shaft (20), may be at transferred further at least partially to the milling head block (11) via the second bearing (19), and/or wherein the first bearing (18) is arranged adjacent to the torque motor (6) in such a manner that forces which are generated during operation of the tool, in particular bending moments and/or tilting moments and/or shear forces, which are transmitted from the tool to the milling drive shaft (20), may be transferred further at least partially to the milling head block (11) via the first bearing (18).

6. The gear cutting machine (1) according to one of the previous claims, **characterized in that** a rear seal holder (28) is arranged adjacent to the rear portion (33) of the milling drive shaft (20), which holds a rear wiper (29) and/or a rear rotary seal (30), wherein the rear wiper (29) and/or the rear rotary seal (30) abut on the milling drive shaft (20) and seal it against a cooling and/or a lubricant circuit, and/or that a front seal holder (25) is arranged adjacent to the front portion (34) of the milling drive shaft (20), which holds a front wiper (26) and/or a front rotary seal (27), wherein the front wiper (26) and/or the front rotary seal (27) abut on the milling drive shaft (20) and seal it against a cooling and/or a lubricant circuit.

7. The gear cutting machine (1) according to one of the previous claims, **characterized in that** a device for weight compensation (9) is provided at the machine column (3), which is in operative connection with the milling head (5).

8. A method for producing gear teeth, such as e. g. external teeth, in particular on annular workpieces, by employing the gear cutting machine (1) according to one of Claims 1 to 7, comprising the steps:
a) clamping a workpiece onto the machining table (4);
b) approaching or feeding a tool, in particular an involute gear cutter (22), to the workpiece by moving the milling head (5) in the direction of the z axis and/or the y axis and fixing the milling head (5) in the direction of the z axis or the y axis;
c) positioning the workpiece by rotation of the machining table (4) and fixing the machining table (4);
d) moving the milling head (5) along the axis which was not fixed in step b) and machining engagement of the tool with the workpiece.

9. The method according to claim 8, **characterized in that** a tooth gap with finished dimension is produced by a one-time implementation of steps a) to d).

10. The method according to one of claims 8 or 9, **characterized in that** the production of the gear teeth is effected over the entire circumference of the annular workpiece or that the production of the gear teeth is effected over a partial area or a partial segment of the circumference of the annular workpiece.

11. The method according to one of claims 8 to 10, **characterized in that** following steps a) to d), the machining table (4) automatically rotates stepwise, in particular at a low speed, about its axis of rotation, wherein the length of the step establishes the width of the tooth to be produced, and therein the machining table (4) is fixed after each step.

12. The method according to claim 11, **characterized in that** the rotation of the machining table (4) about its axis of rotation is effected, in particular, via an electrical or mechanical drive and is determined by a machine control unit.

13. The method according to one of claims 8 to 12, **characterized in that** forces which are occurring during the machining engagement of the tool with the workpiece, in particular bending moments and/or tilting moments and/or shear forces, which are transmitted from the tool to the milling drive shaft (20), are transferred further at least partially to the milling head block (11) via the first bearing (18).

## Revendications

1. Machine à tailler les dentures (1) servant à munir des pièces annulaires d'une denture sur la circonférence complète de la pièce annulaire ou sur une zone partielle ou un segment partiel de la circonférence de la pièce annulaire, comportant un bâti de machine (3) qui peut être déplacé et fixé dans la direction d'un axe y, et comportant une tête de fraisage (5) qui est montée et peut être fixée sur le bâti de machine (3) et qui peut déplacée dans la direction d'un axe z, auquel s'étend parallèlement un axe médian d'une table d'usinage (4) autour duquel la table d'usinage (4), sur laquelle une pièce à usiner peut être fixée, est montée rotative, **caractérisée en ce que** la tête de fraisage (5) présente un bloc de tête de fraisage (11) avec un évidement (21) dans lequel est disposé un arbre d'entraînement de fraise (20) servant à entraîner l'outil de fraisage, lequel est relié à un moteur couple (6) et peut être entraîné par celui-ci, le bloc de tête de fraisage (11) présentant au moins un siège de palier arrière (23) et un siège de palier avant (24) ainsi qu'un premier palier (18) et un second palier (19), le premier palier (18) étant disposé dans le siège de palier arrière (23) et le second palier (19) dans le siège de palier avant (24) et l'arbre d'entraînement de fraise (20) étant monté rotatif dans le premier palier (18) et le second palier (19).

2. Machine à tailler les dentures (1) selon la revendication 1, **caractérisée en ce que** l'évidement (21) présente une symétrie de rotation.

3. Machine à tailler les dentures (1) selon l'une des revendications précédentes, **caractérisée en ce que** l'arbre d'entraînement de fraise (20) est relié au moteur couple (6) directement et sans transmission.

4. Machine à tailler les dentures (1) selon l'une des revendications précédentes, **caractérisée en ce que** le premier palier (18) est un palier d'appui et le second palier (19) est un palier principal.

5. Machine à tailler les dentures (1) selon l'une des revendications précédentes, **caractérisée en ce que** l'arbre d'entraînement de fraise (20) présente au moins une partie avant (34) et une partie arrière (33), dans laquelle un disque de serrage (12) et/ou un outil, en particulier une fraise à tailler les dentures (22), sont prévus sur la partie avant (34), et dans laquelle le second palier (19) est disposé à proximité du disque de serrage (12), de telle sorte que des forces, en particulier des couples de flexion et/ou de renversement et/ou de cisaillement, qui apparaissent lors du fonctionnement de l'outil et sont transmises de l'outil à l'arbre d'entraînement de fraise (20), peuvent être retransmises au moins partiellement au bloc de tête de fraisage (11) par l'intermédiaire du second palier (19), et/ou dans laquelle le premier palier (18) est disposé à proximité du moteur couple (6) de telle sorte que des forces, en particulier des couples de flexion et/ou de renversement et/ou de cisaillement, qui apparaissent lors du fonctionnement de l'outil et sont transmises de l'outil à l'arbre d'entraînement de fraise (20), peuvent être retransmises au moins partiellement au bloc de tête de fraisage (11) par l'intermédiaire du premier palier (18).

6. Machine à tailler les dentures (1) selon l'une des revendications précédentes, **caractérisée en ce qu'**un support de joint arrière (28) est disposé à proximité de la partie arrière (33) de l'arbre d'entraînement de fraise (20), lequel support supportant un racleur arrière (29) et/ou un joint rotatif arrière (30), dans laquelle le racleur arrière (29) et/ou le joint rotatif arrière (30) sont en appui contre l'arbre d'entraînement de fraise (20) et assurent l'étanchéité de ce dernier par rapport à un circuit de liquide de refroidissement et/ou de lubrification, et/ou **en ce qu'**un support de joint avant (25) est disposé à proximité de la partie avant (34) de l'arbre d'entraînement de fraise (20), lequel support supportant un racleur avant (26) et/ou un joint rotatif avant (27), dans laquelle le racleur avant (26) et/ou le joint rotatif avant (27) sont en appui contre l'arbre d'entraînement de fraise (20) et assurent l'étanchéité de ce dernier par rapport à un circuit de liquide de refroidissement et/ou de lubrification.

7. Machine à tailler les dentures (1) selon l'une des revendications précédentes, **caractérisée en ce qu'**un dispositif de compensation de poids (9), qui est en liaison fonctionnelle avec la tête de fraisage (5), est prévu sur le bâti de machine (3).

8. Procédé pour réaliser des dentures, par exemple des dentures extérieures, en particulier sur des pièces annulaires en utilisant la machine à tailler les dentures (1) selon l'une des revendications 1 à 7, comprenant les étapes consistant à :
a) serrer une pièce sur la table d'usinage (4) ;
b) approcher ou avancer un outil, en particulier une fraise à tailler les dentures (22), vers la pièce en déplaçant la tête de fraisage (5) dans la direction de l'axe z et/ou de l'axe y et immobiliser la tête de fraisage (5) dans la direction de l'axe z ou de l'axe y ;
c) positionner la pièce par rotation de la table d'usinage (4) et immobiliser la table d'usinage (4) ;
d) déplacer la tête de fraisage (5) suivant l'axe non immobilisé à l'étape b) et engager l'outil dans la pièce pour son usinage.

9. Procédé selon la revendication 8, **caractérisé en ce qu'**un entredent à la cote finie est réalisé en exécutant une fois les étapes a) à d).

10. Procédé selon l'une des revendications 8 ou 9, **caractérisé en ce que** la denture est réalisée sur la circonférence complète de la pièce annulaire ou **en ce que** la denture est réalisée sur une zone partielle ou un segment partiel de la circonférence de la pièce annulaire.

11. Procédé selon l'une des revendications 8 à 10, **caractérisé en ce que**, après les étapes a) à d), la table d'usinage (4) tourne automatiquement pas à pas, en particulier à faible vitesse, autour de son axe de rotation, la longueur du pas définissant la largeur de la dent à produire, et la table d'usinage (4) étant immobilisée après chaque pas.

12. Procédé selon la revendication 11, **caractérisé en ce que** la rotation de la table d'usinage (4) autour de son axe de rotation s'effectue au moyen d'un entraînement en particulier électrique ou mécanique et est déterminée par une commande de machine.

13. Procédé selon l'une des revendications 8 à 12, **caractérisé en ce que** des forces, en particulier des couples de flexion et/ou de basculement et/ou de cisaillement, qui apparaissent pendant l'engagement de l'outil dans la pièce pour son usinage sont transmises de l'outil à l'arbre d'entraînement de fraise (20), sont retransmises au moins partiellement au bloc de tête de fraisage (11) par l'intermédiaire du premier palier (18).
